# FASCICULE DE BREVET EUROPEEN

(11) **EP 0 337 832 B1**
(45) Date de publication et mention de la délivrance du brevet: **19.05.1993**
(21) Numéro de dépôt: 89400778.0
(22) Date de dépôt: 20.03.1989
(51) Int. Cl.: C04B 35/80, C04B 41/50, C08G 79/08, C08G 77/62

(54) **Procédé pour la réalisation d'un matériau céramique composite à structure fibreuse**
Verfahren zur Darstellung eines keramischen faserigen Verbundmaterials
Process for the production of a ceramic fibre composite material

(30) Priorité: 06.04.1988 FR 8804546
(43) Date de publication de la demande: 18.10.1989
(73) Titulaire: AEROSPATIALE Société Nationale Industrielle, 75781 Paris Cédex 16 (FR)
(72) Inventeur: Debaig-Valade, Caroline, F-33200 Bordeaux (FR); Servens, Christian, F-33160 St-Aubin de Medoc (FR); Filliatre, Claude, F-33400 Talence (FR)
(74) Mandataire: Bonnetat, Christian

(56) Documents cités:
- EP-A- 0 179 589
- US-A- 4 618 591
- AMERICAN CERAMIC SOCIETY BULLETIN, vol. 65, no. 2, janvier 1986, pages 326-335, Columbus, Ohio, US; E. FITZER et al.: "Fiber-reinforced silicon carbide"

## Description

La présente invention concerne un procédé pour la réalisation d'un matériau céramique composite à structure fibreuse, ainsi que le matériau céramique-céramique obtenu par la mise en oeuvre de ce procédé.

On sait que, notamment pour fabriquer des pièces thermomécaniques céramiques destinées par exemple à l'aéronautique, à l'astronautique, à l'industrie automobile ou à l'industrie des fours, on fabrique des matériaux composites comportant une structure fibreuse noyée dans une matière céramique. Pour ce faire, on commence par former une structure poreuse, unidirectionnelle ou multidirectionnelle (à deux ou trois dimensions ou à répartition de fibres aléatoire), à l'aide de fibres de carbure de silicium, d'alumine, de silice, de carbone, ou matière analogue. La porosité d'une telle structure poreuse peut être, en volume, de l'ordre de 40 à 90%. Ensuite, la structure poreuse est noyée dans la matrice céramique.

Pour que le matériau céramique final ainsi obtenu présente des propriétés physiques et mécaniques optimales, il est nécessaire que sa densité soit aussi grande que possible, c'est-à-dire que la matrice emplisse au maximum les pores de la structure fibreuse. Cela nécessite donc de choisir, pour la matrice, une matière dont la viscosité (à l'état de solution ou à l'état fondu) permette une bonne pénétration à l'intérieur de la structure fibreuse. Il en résulte que certaines matières ne peuvent pas être utilisées de ce fait comme matrice. De plus, même lorsque la matière de la matrice est choisie parmi celles susceptibles de présenter une viscosité adéquate, il est nécessaire, pour aider à la pénétration de la structure poreuse par la matière plus ou moins fluide de la matrice, de mettre en oeuvre des cycles de remplissage complexes et de multiplier ces cycles. Il en résulte des coûts et des délais importants de fabrication. Enfin, malgré toutes ces limitations et complications, la densité du matériau ainsi obtenu par les méthodes connues ne peut dépasser une limite supérieure (non optimale pour les propriétés désirées du matériau) du fait que les pores superficiels de la structure se bouchent avant que les pores internes puissent être remplis. Il en résulte donc un colmatage superficiel empêchant le remplissage complet de la structure poreuse par la matière de la matrice.

La présente invention a pour objet de remédier à ces inconvénients. Elle permet d'obtenir des matériaux composites céramiques denses, à la pression atmosphérique et avec un nombre de cycles limité, de sorte que les coûts et délais de fabrication sont réduits.

A cette fin, selon l'invention, le procédé pour la réalisation d'un matériau céramique composite, selon lequel on commence par former une structure fibreuse en fibre réfractaire qui est ensuite noyée dans la matière d'une matrice céramique, est remarquable en ce que, pour introduire ladite matrice dans ladite structure, on réalise la suite des opérations suivantes :
a) on imprègne ledit support fibreux par un catalyseur choisi parmi ceux permettant la polymérisation d'un précurseur organométallique de ladite matrice céramique ;
b) on imprègne ledit support fibreux imprégné dudit catalyseur de polymérisation par ledit précurseur organométallique ;
c) on polymérise ledit précurseur organométallique ; et
d) on pyrolyse ledit précurseur organométallique pour obtenir ladite matrice.

La Demanderesse a trouvé que ce processus permettait d'améliorer le remplissage de la structure poreuse par la matrice, ce résultat remarquable étant dû au fait que le catalyseur de polymérisation peut sans difficulté être introduit, par example en solution, dans les pores de la matrice, ce qui, ensuite, favorise la formation du polymère organométallique, et donc de la matrice au sein même de la structure fibreuse. Il en résulte donc deux effets concomitants très importants. D'une part, l'introduction de la matière de la matrice dans la structure poreuse et la polymérisation de cette matière sont pratiquement simultanées, ce qui simplifie considérablement chacun des cycles de remplissage de la structure poreuse. D'autre part, puisque la matière de la matrice peut se développer au sein même de la structure poreuse, les pores internes de celle-ci sont remplis en même temps que les pores superficiels, de sorte que l'on ne se heurte pas aux difficultés du colmatage superficiel décrit ci-dessus à propos de la technique antérieure. De plus, grâce à l'invention, on s'affranchit des propriétés de fusibilité ou de solubilité dans des solvants appropriés pour la matière de la matrice.

Ainsi, le procédé conforme à l'invention permet d'améliorer la qualité du matériau composite par augmentation de sa densité, tout en n'utilisant que des procédures simples de mise en oeuvre, essentiellement du fait que la réaction de polymérisation menant au précurseur de la matrice et l'imprégnation de la structure fibreuse sont effectuées de manière simultanée, et au sein même de cette structure fibreuse. Cette double opération d'imprégnation et de polymérisation peut ainsi être conduite sans avoir à changer de réacteur et à la pression atmosphérique, ou bien éventuellement avec mise en oeuvre, de façon connue, de cycles de vide et de pression, afin d'améliorer encore le rendement d'imprégnation.

Comme catalyseur de polymérisation, on peut utiliser les polyborosiloxanes, tels que le polyborodiméthylsiloxane, le polyborodiéthylsiloxane, le polyborodiphénylsiloxane ou le polyborodivinylsiloxane, des acides organiques, tels que l'acide trifluorométhanesulfonique ou l'acide tribromométhanesulfonique et/ou l'acide trifluoroacétique, ou bien encore des métaux de transition sous forme de complexes, comme le dodécacarbonyltriruthénium, par exemple.

En fonction de la matière désirée pour la matrice (carbure de silicium, nitrure de silicium, sialon, nitrure de bore, etc...), les précurseurs organométalliques polymérisables de la matrice céramique peuvent être choisis parmi les carbosilanes, les silazanes, les carbosilazanes, les borazines, les borazanes ou les aluminosilicates associés à des silanes.

Le précurseur organométallique utilisé peut être, soit un précurseur direct de la matière désirée pour la matrice, soit un précurseur indirect susceptible de donner naissance par traitement thermique à ce précurseur direct. Par exemple, lorsque l'on désire obtenir une matrice de carbure de silicium, on peut partir du précurseur direct formé par un carbosilane, ou bien du précurseur indirect constitué par le polydiméthylsilane. Dans ce dernier cas, le polydiméthylsilane est soumis à un traitement thermique (à une température de l'ordre de 350°C) et engendre le carbosilane polymérisable qui constituera le précurseur direct.

De façon analogue, lorsque l'on désire l'obtention d'une matrice en nitrure de bore ou en nitrure de silicium, par example, on peut respectivement utiliser, comme précurseur indirect, la B-triphényl N-triméthylborazine ou le tétraméthyl-1,1,3,3 disilazane.

Lorsque l'on utilise un tel précurseur indirect, il est avantageux, dans l'opération b) ci-dessus, de mettre en contact le support fibreux, imprégné du catalyseur, avec la précurseur indirect et d'effectuer quasi-simultanément le traitement thermique permettant de transformer le précurseur indirect en précurseur direct, l'imprégnation du support fibreux avec ledit précurseur direct et la polymérisation de ce dernier. Ainsi, ces trois opérations peuvent être menées dans le même réacteur.

D'une manière générale, le procédé selon l'invention peut être mis en oeuvre de la façon suivante :
a)
   .a1 - on forme une solution du catalyseur de polymérisation dans un solvant ;
   .a2 - on plonge ladite structure fibreuse dans ladite solution du catalyseur, de sorte que celui-ci est adsorbé par ladite structure ;
   .a3 - on sèche ladite structure pour permettre l'évaporation dudit solvant ;
b) on recouvre ladite structure avec ledit précurseur direct ou indirect ;
c) on soumet ladite structure recouverte dudit précurseur à un traitement thermique en la chauffant entre 60°C et 400°C, suivant les cas, pendant un temps compris entre 4 et 40 heures, de façon que :
   .c 1 - le précurseur indirect se transforme en précurseur direct, dans le cas où un précurseur indirect est utilisé ;
   .c 2 - le précurseur direct pénètre dans ladite structure fibreuse ;
   .c 3 - le précurseur direct polymérise au sein de la structure fibreuse ;
d)
   .d 1 - on refroidit ladite structure fibreuse imprégnée de précurseur polymérisé ; puis
   .d 2 - on soumet cette structure fibreuse à un traitement thermique pour pyrolyser le précurseur polymérisé et le transformer en la matière céramique désirée.

Afin d'obtenir la densification progressive et optimale de la structure fibreuse de départ, on répète plusieurs fois le cycle des opérations a), b), c) et d), jusqu'à obtenir la densité désirée pour le matériau céramique composite, constitué de ladite structure fibreuse et de ladite matrice.

Les exemples suivants, associés aux figures annexées, feront bien comprendre comment l'invention peut être réalisée.

### EXEMPLE I

1 - On réalise une structure de fibres à la forme d'un disque d'une épaisseur de 1 cm et d'un diamètre de 4 cm. Les fibres sont en carbure de silicium et ont une longueur comprise entre 100 et 5000 microns. Les fibres sont réparties de façon aléatoire dans le volume du disque et le taux volumique de fibres est de 25 % (porosité volumique égale à 75%). Le poids spécifique de la structure est alors égal à 0,8 g/cm3.
2 - On forme une solution de polyborodiphénylsiloxane à 40 g par litre dans un solvant. Le polyborodiphénylsiloxane est par exemple préparé à partir de diphényldichlorosilane et d'acide borique.
   Cette solution de polyborodiphénylsiloxane constitue le catalyseur de polymérisation.
3 - On prépare du polydiméthylsilane.
   A cet effet, on peut par exemple suivre la procédure suivante.
   Dans un réacteur de 201, on introduit 7,51 de xylène, puis 1250g de sodium. Le milieu est chauffé à 105°C. On ajoute alors 3200g de diméthyldichlorosilane. Dès la fin de l'addition, la température est stabilisée à 120°C pendant 10 heures.
   Après refroidissement, on détruit l'excès du sodium en introduisant 91 de méthanol. L'hydrolyse est alors complétée dans 40 litres d'eau. On réalise ensuite plusieurs lavages successifs à l'eau, à l'acétone, puis au tétrahydrofuranne.
   On isole après séchage 1080 g de polydiméthylsilane, qui se présente sous la forme d'une poudre blanche.
4 - La structure fibreuse est plongée pendant 30 minutes dans la solution du catalyseur de polymérisation préparée sous 2), de sorte que ladite structure adsorbe ledit catalyseur (Opération a).
   Ensuite, la structure fibreuse est sortie de ladite solution et séchée, de façon à ce que le solvant s'évapore.
5 - La structure fibreuse ainsi séchée, est introduite dans un réacteur (Opération b), puis est recouverte avec du polydiméthylsilane préparé sous 3), sous une atmosphère inerte et/ou réductrice.
6 - Ce réacteur est progressivement chauffé jusqu'à 400°C pour amorcer une réaction de thermolyse. Dès que cette température est atteinte, le milieu réactionnel est refroidi aux alentours de 300°C. Cette température est ensuite maintenue au moins 20 heures.
   Pendant cette opération, le polydiméthylsilane se transforme en carbosilanes liquides, qui polymérisent (Opération c).
7 - Après refroidissement, la structure fibreuse imprégnée de polycarbosilanes est extraite du réacteur, puis est soumise à pyrolyse, de sorte que les polycarbosilanes se transforment en carbure de silicium (Opération d).
8 - Après refroidissement, on mesure le poids spécifique de la structure qui est alors égal à 1 g/cm3.
9 - Le cycle de traitement décrit sous les points 4 à 8 est répété six fois, à chaque fois avec la structure fibreuse densifiée obtenue au cycle précédent.

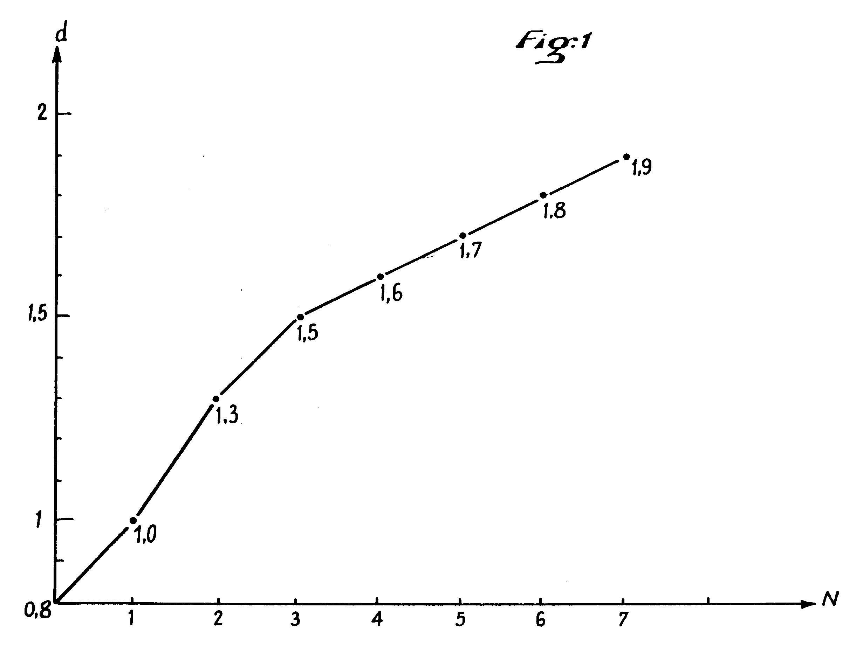

   Sur la figure 1 annexée, on a représenté l'évolution progressive du poids spécifique d en fonction du nombre N de cycles de traitement. On peut y voir qu'à la fin du dernier traitement (le septième), le poids spécifique du matériau composite conforme à l'invention est égal à 1,9 g/cm3.
10 - Dans le disque de matériau composite, on forme des éprouvettes dont on évalue les propriétés mécaniques par mesure de contrainte à la rupture en flexion 3 points. Cette mesure donne une contrainte à la rupture égale à 90 MPa.

### EXEMPLE II

On réalise une structure de fibres tridimensionnelle à la forme d'un parallélépipède (5,8 x 4,2 x 3,2 cm). Les fibres longues sont en carbure de silicium. Le taux volumique de fibres est de l'ordre de 45 % (porosité volumique égale à 55 %). Le poids spécifique de la structure est alors égal à 0,8 g/cm3.
On répète ensuite les étapes 2 à 4 de l'Exemple I. De plus:
11 - On effectue, sous atmosphère inerte, la thermolyse de 1200 g de polydiméthylsilane à 350°C, puis on transvase sous vide les silanes ainsi formés dans un rectificateur. On isole ainsi des carbosilanes à l'état liquide avec un rendement de 90%. Ensuite :
12 - La structure fibreuse séchée, résultant de l'opération 4, est recouverte desdits carbosilanes liquides, puis chauffée sous atmosphère inerte et/ou réductrice à 300°C, pendant au moins 20 heures.
   Il en résulte la polymérisation des carbosilanes liquides (Opération c). Ensuite, on procède aux étapes 7 et 8 de l'Exemple I. On trouve un poids spécifique égal à 1,1 g/cm3.
13 - Le cycle de traitement des points 4, 11, 12, 7 et 8 est répété sept fois, à chaque fois avec la structure fibreuse densifiée obtenue au cycle précédent.

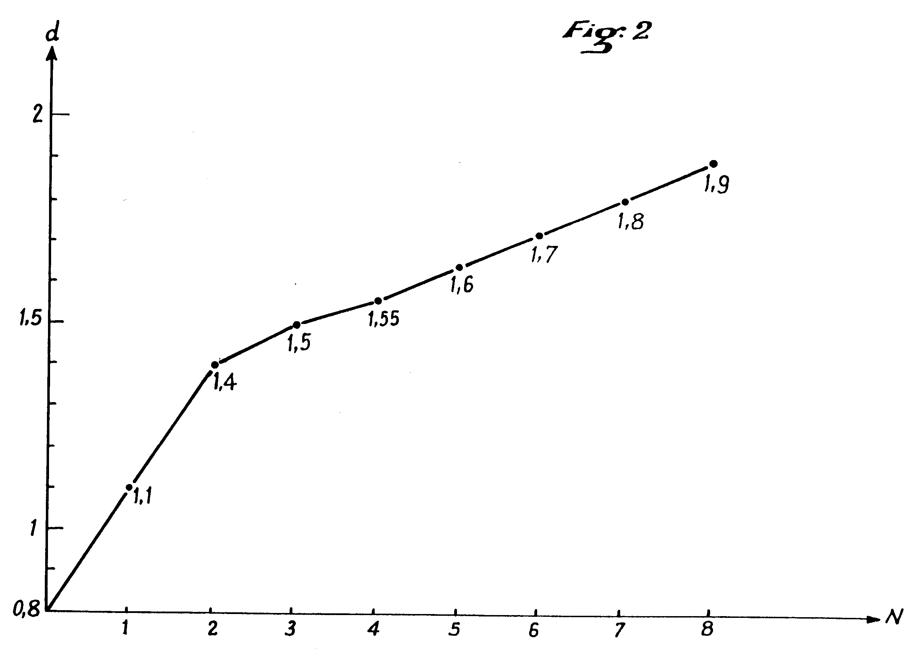

Sur la figure 2 annexée, on a représenté l'évolution progressive du poids spécifique d en fonction du nombre N de cycles de traitement. On peut y voir qu'à la fin du dernier traitement (le huitième), le poids spécifique du matériau composite conforme à l'invention est égal à 1,9 g/cm3.
On réalise l'opération du point 10, et on trouve une contrainte à la rupture égale à 125 MPa.

### EXEMPLE III

1 - On réalise une structure de fibres courtes d'alumine réparties de façon aléatoire comme décrit dans le point 1 de l'Exemple I, le poids spécifique étant de 1,2 g/cm3.
2 - On forme une solution d'acide trifluoroacétique à 10 g par litre maximum dans un solvant polaire. L'acide trifluoroacétique utilisé est un produit commercial. Cette solution d'acide trifluoroacétique constitue le catalyseur de polymérisation.
3 - On prépare de la B-triphényl N-triméthyl borazine par condensation d'une solution éthérée de bromure de phénylmagnésium sur la N-triméthylborazine, le rendement après extraction et purification étant de l'ordre de 50 %.
4 - La structure fibreuse est imprégnée par le catalyseur, conformément au point 4 de l'Exemple I.
5 - La structure fibreuse séchée est introduite dans un réacteur (opération b) ), puis est recouverte avec la B-triphényl N-triméthylborazine préparée selon 3) sous une atmosphère inerte ou réductrice.
6 - Ce réacteur est progressivement chauffé au dessus du point de fusion de ce précurseur indirect, soit environ 350°C pour amorcer la réaction de polymérisation. Cette température est ensuite maintenue pendant au moins 24 heures.
7 - Après refroidissement, la structure fibreuse imprégnée de polyborazines est extraite du réacteur, puis soumise à pyrolyse sous atmosphère d'ammoniac, dans le but d'obtenir la matière céramique de type nitrure de bore désirée.
8 - Après refroidissement, on mesure le poids spécifique de la structure qui est alors égal à 1,3 g/cm3.
9 - Le cycle de traitement décrit sous les points 4 à 8 est répété neuf fois, à chaque fois avec la structure fibreuse densifiée obtenue au cycle précédent, le rendement en matière céramique de ce précurseur étant plus faible que celui des précurseurs décrits ci-dessus.

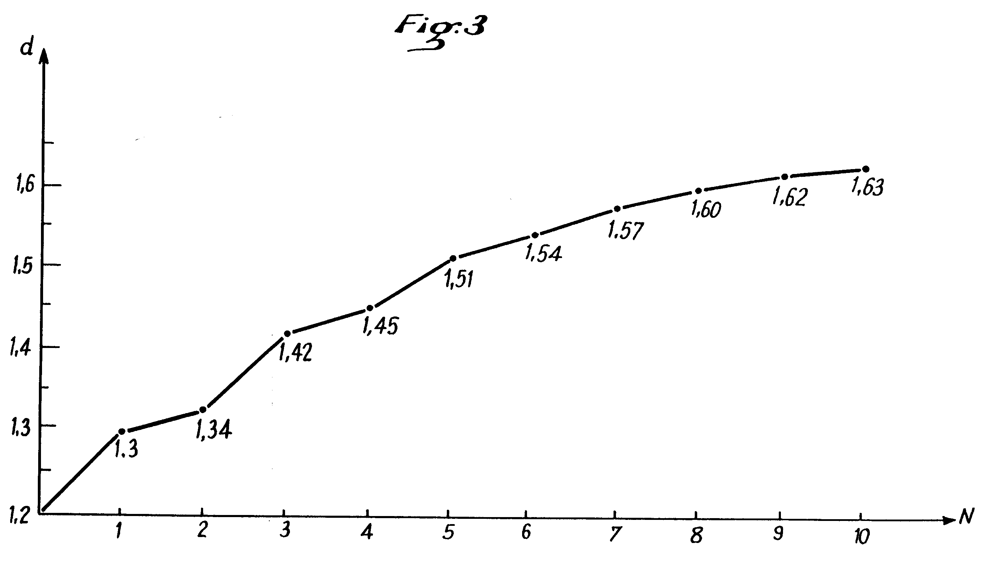

Sur la figure 3 annexée, on a représenté l'évolution progressive du poids spécifique d fonction du nombre N de cycles de traitement.
On peut y voir qu'à la fin du dernier traitement (le dixième) le poids spécifique du matériau composite alumine/nitrure de bore conforme à l'invention est égal à 1,63 g/cm3.
On réalise l'opération du point 10 de l'Exemple I, et on trouve une contrainte à la rupture moyenne égale à 80 MPa.

### EXEMPLE IV

1 - On réalise une structure de fibres courtes d'alumino-borosilicate réparties de façon aléatoire comme décrit dans le point 1 de l'Exemple I, le poids spécifique étant de 1g/cm3.
2 - On forme une solution de dodécacarbonyltriruthénium (produit commercial) à 10 g/l maximum dans un solvant polaire. Cette solution constitue le catalyseur de polymérisation.
3 - La structure fibreuse est imprégnée par le catalyseur selon le point 4 de l'Exemple I.
4 - La structure fibreuse séchée est introduite dans un réacteur, puis est recouverte de tétraméthyl-1,1,3,3 disilazane (produit commercial).
5 - On introduit un courant d'ammoniac dans le réacteur, puis on chauffe à 70°C pendant au moins 12 heures pour engendrer les polysilazanes.
6 - Après refroidissement, la structure fibreuse imprégnée de polysilazanes est extraite du réacteur, puis est soumise à pyrolyse sous atmosphère d'ammoniac jusqu'à 800°C, puis sous azote, dans le but d'obtenir la matière céramique de type nitrure de silicium désirée.
7 - Après refroidissement, on mesure le poids spécifique de la structure qui est alors égal à 1,2 g/cm3.
8 - Le cycle de traitement décrit sous les points 4 à 8 est répété six fois, à chaque fois avec la structure fibreuse densifiée obtenue au cycle précédent.

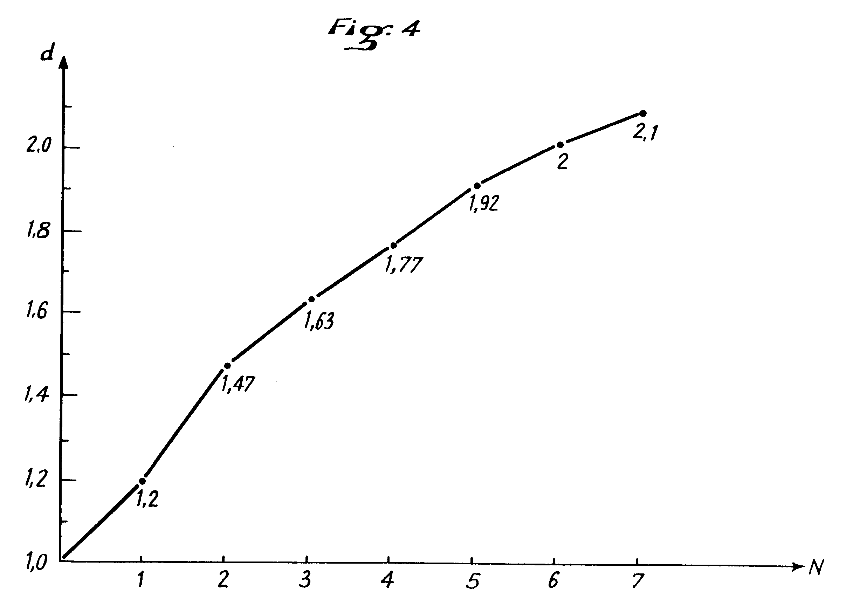

Sur la figure 4 annexée, on a représenté l'évolution progressive du poids spécifique d en fonction du nombre N de cycles de traitement.
On peut y voir qu'à la fin du dernier traitement (le septième), le poids spécifique du matériau composite alumine/nitrure de silicium, conforme à l'invention, est égal à 2,1 g/cm3.
On réalise l'opération du point 10 de l'Exemple I, et on trouve une contrainte à la rupture moyenne égale à 120 MPa.

## Revendications

1. Procédé pour la réalisation d'un matériau céramique composite, selon lequel on commence par former une structure fibreuse en fibre réfractaire qui est ensuite noyée dans la matière d'une matrice céramique,
caractérisé en ce que, pour introduire ladite matrice dans ladite structure, on réalise la suite des opérations suivantes :
a) on imprègne ledit support fibreux par un catalyseur chosi parmi ceux permettant la polymérisation d'un précurseur organométallique de ladite matrice céramique ;
b) on imprègne ledit support fibreux imprégné dudit catalyseur de polymérisation par ledit précurseur organométallique ;
c) on polymérise ledit précurseur organométallique ; et
d) on pyrolyse ledit précurseur organométallique pour obtenir ladite matrice.

2. Procédé selon la revendication 1,
caractérisé en ce que ledit support fibreux est imprégné par une solution dudit catalyseur de polymérisation.

3. Procédé selon l'une quelconque des revendications 1 ou 2,
caractérisé en ce que ledit catalyseur de polymérisation est choisi parmi les polyborosiloxanes, tels que le polyborodiméthylsiloxane, le polyborodiéthylsiloxane, le polyborodiphénylsiloxane ou le polyborodivinylsiloxane, parmi les acides organiques, tels que l'acide trifluorométhanesulfonique ou l'acide tribromométhanesulfonique et/ou l'acide trifluoroacétique, ou bien encore parmi les métaux de transition sous forme de complexes, comme le dodécacarbonyltriruthénium.

4. Procédé selon l'une quelconque des revendications 1 à 3,
caractérisé en ce que les précurseurs organométalliques polymérisables de la matrice céramique sont choisis parmi les carbosilanes, les silazanes, les carbosilazanes, les borazines, les borazanes ou les aluminosilicates associés à des silanes.

5. Procédé selon l'une quelconque des revendications 1 à 4,
caractérisé en ce que le précurseur organométallique utilisé est un précurseur direct de la matière désirée pour la matrice.

6. Procédé selon la revendication 5, pour l'obtention d'une matrice de carbure de silicium,
caractérisé en ce que le précurseur direct est un carbosilane.

7. Procédé selon l'une quelconque des revendications 1 à 4,
caractérisé en ce que le précurseur organométallique utilisé est un précurseur indirect susceptible de donner naissance par traitement thermique à un précurseur direct de la matière désirée pour la matrice.

8. Procédé selon la revendication 7, pour l'obtention d'une matrice de carbure de silicium,
caractérisé en ce que le précurseur indirect est du polydiméthylsilane.

9. Procédé selon la revendication 7, pour l'obtention d'une matrice de nitrure de bore,
caractérisé en ce que le précurseur indirect est la B-triphényl N-triméthylborazine.

10. Procédé selon la revendication 7, pour l'obtention d'une matrice de nitrure de silicium,
caractérisé en ce que le précurseur indirect est le tétraméthyl-1,1,3,3 disilazane.

11. Procédé selon l'une quelconque des revendications 7 à 10,
caractérisé en ce que, dans l'opération b) ci-dessus, on met en contact le support fibreux, imprégné du catalyseur, avec le précurseur indirect et on effectue quasi-simultanément le traitement thermique permettant de transformer le précurseur indirect en précurseur direct, l'imprégnation du support fibreux avec ledit précurseur direct et la polymérisation de ce dernier.

12. Procédé selon l'une quelconque des revendications 1 à 11,
caractérisé en ce que :
a)
.a1 - on forme une solution du catalyseur de polymérisation dans un solvant ;
.a2 - on plonge ladite structure fibreuse dans ladite solution du catalyseur, de sorte que celui-ci est adsorbé par ladite structure ;
.a3 - on sèche ladite structure pour permettre l'évaporation dudit solvant ;
b) on recouvre ladite structure avec ledit précurseur direct ou indirect ;
c) on soumet ladite structure recouverte dudit précurseur à un traitement thermique en la chauffant entre 60°C et 400°C, suivant les cas, pendant un temps compris entre 4 et 40 heures, de façon que :
.c 1 - le précurseur indirect se transforme en précurseur direct, dans le cas où un précurseur indirect est utilisé ;
.c 2 - le précurseur direct pénètre dans ladite structure fibreuse ;
.c 3 - le précurseur direct polymérise au sein de la structure fibreuse ;
d)
.d 1 - on refroidit ladite structure fibreuse imprégnée de précurseur polymérisé ; puis
.d 2 - on soumet cette structure fibreuse à un traitement thermique pour pyrolyser le précurseur polymérisé et le transformer en la matière de la matrice céramique désirée.

13. Procédé selon l'une quelconque des revendications 1 à 12,
caractérisé en ce que l'on répète plusieurs fois le cycle des opérations a), b), c) et d), jusqu'à obtenir la densité désirée pour le matériau céramique composite, constitué de ladite structure fibreuse et de ladite matrice.

## Patentansprüche

1. Verfahren zur Herstellung eines keramischen Verbundmaterials, nach welchem man beginnt, ein Fasergefüge aus schwer schmelzbaren Fasern zu bilden, das nachher in die Substanz einer keramischen Matrize eingelassen wird,
dadurch gekennzeichnet,
daß um genannte Matrize in das genannte Gefüge einzubringen, der Reihe nach folgende Arbeitsgange duchgeführt werden:
a) man imprägniert den genannten faserigen Träger mit einem Katalysator, welcher unter solche ausgesucht wird die die Polymerisation eines organometallischen Zwischenstoffes der genannten keramische Matrize erlaubt;
b) man imprägniert genannte imprägnierten faserigen Träger des genannten Polymerisationskatalysators mit dem genannten organometallischen Zwischenstoff;
c) man polymerisiert genannten organometallischen Zwischenstoff und
d) man zersetzt thermisch den organometallischen Zwischenstoff um genannte Matrize zu erhalten.

2. Verfahren gemäß Anspruch 1,
dadurch gekennzeichnet,
daß genannter faseriger Träger mit einer Lösung des genannten Polymerisationskatalysators imprägniert wird.

3. Verfahren gemäß irgendeinem der Ansprüche 1 oder 2,
dadurch gekennzeichnet,
daß genannter Polymerisationskatalysator unter der Polyborosiloxanen ausgesucht wird, wie zum Beispiel Polyborodimethylsiloxan, Polyborodiethylsiloxan, Polyborodiphenylsiloxan oder Polyborodivinylsiloxan, unter den organischer Säuren, zum Beispiel trifluoromethansulfonische Säure, tribromethansulfonische und/ oder trifluoracetische Säure, oder noch unter den Übergangsmetallen als Komplexe, wie Dodecacarbonyltriruthenium.

4. Verfahren gemäß irgendeinem der Ansprüche 1 bis 3,
dadurch gekennzeichnet,
daß die polymerisierbaren organometallischen Zwischenstoffen unter den Karbosilannen, Silazanen, Karbosilazanen, Borazinen, Borazanen oder den mit Silan verbundenen Aluminiumsilikaten ausgewählt werden.

5. Verfahren gemäß irgendeinem der Ansprüche 1 bis 4,
dadurch gekennzeichnet,
daß der benutzte organometallische Zwischenstoff ein direkter Zwischenstoff des für die Matrize gewünschten Materials ist.

6. Verfahren gemäß Anspruch 5, um eine Matrize aus Siliziumkarbid zu erhalten,
dadurch gekennzeichnet,
daß der direkte Zwischenstoff ein Carbosilan ist.

7. Verfahren gemäß irgendeinem der Ansprüche 1 bis 4,
dadurch gekennzeichnet,
daß der benutzte organometallische Zwischenstoff ein indirekter Zwischenstoff ist, der durch thermische Behandlung einen direkten Zwischenstoff des für die Matrize gewünschten Materials erzeugen kann.

8. Verfahren gemäß Anspruch 7, um eine Matrize aus Siliziumkarbid zu erhalten,
dadurch gekennzeichnet,
daß der indirekte Zwischenstoff Polymethylsilan ist.

9. Verfahren gemäß Anspruch 7, um eine Matrize aus Bornitrid zu erhalten,
dadurch gekennzeichnet,
daß der indirekte Zwischenstoff B-triphenyl N-trimethylborazin ist.

10. Verfahren gemäß Anspruch 7, um eine Matrize aus Siliziumnitrid zu erhalten,
dadurch gekennzeichnet,
daß der indirekte Zwischenstoff Tetramethyl-1,1,3,3 Disilazan ist.

11. Verfahren gemäß irgendeinem der Ansprüche 7 bis 10,
dadurch gekennzeichnet,
daß nach dem obigen Arbeitsgang b), man den vom Katalysator imprägnierten faserigen Träger mit dem indirekten Zwischenstoff in Kontakt bringt und man fast gleichzeitig die thermische Behandlung, welche die Umwandlung des indirekten Zwischenstoffes in.einen direkten Zwischenstoff erlaubt, die Imprägnierung des faserigen Trägers mit dem direkten Zwischenstoff und die Polymerisation des letzteren durchführt.

12. Verfahren gemäß irgendeinem der Ansprüche 1 bis 11,
dadurch gekennzeichnet, daß
a)
a1 - man eine Lösung des Polymerisationskatalysators in einem Lösungsmittel bildet;
a2 - man das genannte Fasergefüge in genannte Katalysatorlösung taucht, so daß diese durch das Gefüge absorbiert wird;
a3 - man genanntes Gefüge trocknet, um die Verdampfung des Lösungsmittels zu ermöglichen;
b) man genanntes Gefüge mit dem genannten direkten oder indirekten Zwischenstoff bedeckt;
c) man genanntes mit dem Zwischsenstoff bedecktes Gefüge einer thermischen Behandlung unterwirft, indem man es bei 60°C bis 400°C erhitzt, je nach Fall, während einer Dauer zwischen 4 und 40 Stunden, so daß
c1 - der indirekte Zwischenstoff sich in einen direkten umwandelt, falls ein indirekter Zwischenstoff benutzt wird;
c2 - der direkte Zwischenstoff in das Fasergefüge eindringt;
c3 - der direkte Zwischenstoff im Innern des Fasergefüges polymerisiert;
d1 - man das genannte mit polymerisertem Zwischenstoff imprägnierte Fasergefüge abkühlt, und dann
d2 - man dieses Fasergefüge einer thermischen Behandlung unterzieht, um den polymerisierten Zwischenstoff thermisch zu zersetzen und ihn in das gewünschte Material der keramischen Matrize umzuwandeln.

13. Verfahren gemäß irgendeinem der Ansprüche 1 bis 12,
dadurch gekennzeichnet,
daß man den Arbeitszyklus a), b) c) und d) mehrere Male wiederholt, bis die gewünschte Dichte des aus der genannten Faserstruktur und der genannten Matrize bestehende keramische Verbundmaterials erreicht ist.

## Claims

1. Process for the production of a composite ceramic material, according to which a fibrous structure of refractory fibre is first formed which is then embedded in the material of a ceramic matrix, characterised in that, in order to introduce the said matrix into the said structure, the following sequence of operations is carried out:
a) The said fibrous support is impregnated with a catalyst chosen from those permitting the polymerisation of an organometallic precursor of the said ceramic matrix,
b) The said fibrous support impregnated with the said polymerisation catalyst is impregnated with the said organometallic precursor;
c) The said organometallic precursor is polymerised; and
d) The said organometallic precursor is pyrolysed in order to obtain the said matrix.

2. Process according to Claim 1, characterised in that the said fibrous support is impregnated with a solution of the said polymerisation catalyst.

3. Process according to either of Claims 1 or 2, characterised in that the said polymerisation catalyst is chosen from polyborosiloxanes, such as polyborodimethylsiloxane, polyborodiethylsiloxane, polyborodiphenylsiloxane or polyborodivinylsiloxane, from organic acids, such as trifluoromethanesulphonic acid or tribromomethansulphonic acid and/or trifluoroacetic acid, or alternatively from transition metals in the form of complexes, such as dodecacarbonyltriruthenium.

4. Process according to any one of Claims 1 to 3, characterised in that the polymerisable organometallic precursors of the ceramic matrix are chosen from carbosilanes, silazanes, carbosilazanes, borazines, borazanes or aluminosilicates in combination with silanes.

5. Process according to any one of Claims 1 to 4, characterised in that the organometallic precursor used is a direct precursor of the material desired for the matrix.

6. Process according to Claim 5, for the production of a silicon carbide matrix, characterised in that the direct precursor is a carbosilane.

7. Process according to any one of Claims 1 to 4, characterised in that the organometallic precursor used is an indirect precursor capable of giving rise, by heat treatment, to a direct precursor of the material desired for the matrix.

8. Process according to Claim 7, for the production of a silicon carbide matrix, characterised in that the indirect precursor is a polydimethylsilane.

9. Process according to Claim 7, for the production of a boron nitride matrix characterised in that the indirect precursor is B-triphenyl-N-trimethylborazine.

10. Process according to Claim 7, for the production of a silicon nitride matrix, characterised in that the indirect precursor is 1,1,3,3-tetramethyldisilazane.

11. Process according to any one of Claims 7 to 10 characterised in that, in the above operation b), the fibrous support, impregnated with the catalyst, is brought into contact with the indirect precursor and the heat treatment, allowing conversion of the indirect precursor to a direct precursor, the impregnation of the fibrous support with the said direct precursor and the polymerisation of the latter are carried out virtually simultaneously.

12. Process to any one of Claims 1 to 11 characterised in that:
a)
.a1 - a solution of polymerisation catalyst in a solvent is formed:
.a2 - the said fibrous structure is immersed in the said catalyst solution in such away that the latter is adsorbed by the said structure;
.a3 - the said structure is dried in order to permit the evaporation of the said solvent;
b) the said structure is covered with the said direct or indirect precursor;
c) the said structure covered with the said precursor is subjected to a heat treatment by heating it at between 60°C and 400°C, as appropriate, for a period of between 4 and 40 hours, such that:
.c1 - the indirect precursor is converted to a direct precursor, if an indirect precursor is used:
.c2 - the direct precursor penetrates into the said fibrous structure;
.c3 - the direct precursor polymerises within the fibrous structure;
d)
.d1 - the said fibrous structure impregnated with polymerised precursor is cooled; then
.d2 - the said fibrous structure is subjected to a heat treatment in order to pyrolyse the polymerised precursor and to convert it to the desired ceramic material.

13. Process according to any one of Claims 1 to 12 characterised in that the cycle of operations a), b), c) and d) is repeated several times until the desired density for the composite ceramic material, consisting of the said fibrous structure and the said matrix, is obtained.
